# EUROPEAN PATENT SPECIFICATION

(11) **EP 1 233 905 B1**
(45) Date of publication and mention of the grant of the patent: **11.06.2008**
(21) Application number: 00952173.3
(22) Date of filing: 24.07.2000
(51) Int. Cl.: B64C 25/68

(54) **LAUNCH AND RECOVERY SYSTEM FOR UNMANNED AERIAL VEHICLES**
START- UND AUFFANGSYSTEM FÜR UNBEMANNTE LUFTFAHRZEUGE
LANCEMENT ET RECUPERATION POUR VEHICULES AERIENS TELEPILOTES

(30) Priority: 23.07.1999 US 145286 P
(43) Date of publication of application: 28.08.2002
(73) Proprietor: Advanced Aerospace Technologies, Inc., St. Louis, MO 63124 (US)
(72) Inventor: MCDONNELL, William, R., St. Louis, MO 63124 (US)
(74) Representative: Weydert, Robert
(86) International application number: PCT/US2000/020099
(87) International publication number: WO 2001/007318

(56) References cited:
- WO-A-00/75014
- DE-A- 4 301 671
- DE-A1- 4 301 671
- GB-A- 2 080 216
- GB-A- 2 219 777
- US-A- 1 383 595
- US-A- 1 634 964
- US-A- 2 435 197
- US-A- 4 753 400
- US-A- 5 054 717
- US-A- 5 906 336

## Description

### FIELD OF THE INVENTION

The present invention relates to the methods and mechanisms required retrieve aircraft from point locations without the use of runways. Aircraft launching is also described but does not form part of the invention.

### BACKGROUND OF THE INVENTION

Previously aircraft have been fitted with tail hooks or other apparatus to try to engage arresting cables or have been flown into nets in order to arrest their forward movement in a short distance.

Prior art US patent number 4,753,400 (Reuter, et al.) discloses a very complicated system with a launching parachute and parachute retainer that gets jettisoned for each recovery cycle which in turn launches a ram-air parachute which holds up a ribbon parachute which acts to capture the UAV. A ship mounted stanchion, net and rotating cradle is then required to disentangle the UAV from the ribbon parachute. In this prior art the UAV engaged the ribbon parachute just below the supporting ram-air parachute with very little arrestment distance and thus very high loads. In this prior art the UAV approaches in the turbulent, blocked flow from the ribbon parachute and the ribbon parachute also causes a very large amount of unnecessary drag for the system.

There is also another problem with this prior art. Not only is there no apparent mechanism for retaining the UAV after it impacts the ribbon parachute but it would appear that the UAV would tend to bounce off and tend to drop from the ribbon parachute. Current state-of-the-art UAV launch and arrestment systems are bulky and difficult to integrate onto smaller ships and are time-consuming to operate, erect and tear down. In addition the recovery is very sensitive to sea states and ship motion and very often results in damage to the UAV and arrestment system. The recovery also requires significant piloting skills since the UAV must hit the center of the arrestment net in close proximity to the water, ship structure and personnel while travelling at relatively high speeds through the turbulent air wake from the ship.

Reference is also made to US-A-1,634,964 which discloses a combination of an aerial recovery system for an aircraft and an aircraft as defined in precharacterizing portion of independent claim 1, and a method for capturing an aircraft as defined in the precharacterizing portion of independent claim 23.

In US-A-1,634,964 a free end of an anchored cable is carried aloft by a captive balloon. A dirigible aircraft is navigated to engage and clutch the cable by a device carried by the aircraft. The device has spreading cable engagement arms to guide the cable into an automatic clutch.

In WO 00/75014 which forms part of the state of the art according to Article 54(3) EPC there is disclosed a method and apparatus for capturing a flying object. This document discloses a length of rope suspended across the path of the flying object and one or more hooks on the flying object for engaging the rope.

### SUMMARY OF THE INVENTION

The present invention provides improvement in the recovery of aircraft from a point location without the need for runways.

In accordance with one aspect of the invention there is provided, in combination, an aerial recovery system for an aircraft and an aircraft;
said aerial recovery system comprising at least one arrestment line held up at at least an upper end by a support structure, a lower end of the arrestment line being restrained;
said aircraft having a capturing device for capturing said line and a deflecting structure for deflecting said line laterally into engagement with said capturing device;
characterized in that the support structure extends from an upper suspension point for the arrestment line to a base, and that the deflecting structure comprises a wing of said aircraft, said deflecting structure having at least a 15 degrees swept back or 20 degrees swept forward angle to more reliably deflect said arrestment line laterally to said capturing device.

In accordance with another aspect of the invention there is provided a method for capturing an aircraft, comprising:
positioning an arrestment line across the flight path of the aircraft in a generally vertical orientation;
guiding a lateral deflecting structure of the aircraft to strike the line, the lateral deflecting structure comprising a wing of the aircraft and being swept back at least 15 degrees or swept forward at least 20 degrees to more reliably deflect said line laterally to a capturing device,
decelerating the aircraft under the restraint of the line while absorbing kinetic energy from the aircraft at a lower end of the line,
and removing the aircraft from the line.

Advantageous features of the combination are defined in the dependent claims 2 to 22 and advantageous method steps are defined in the dependent claims 24 to 28.

One preferred method of recovery is for the UAV to fly into and latch onto cables hanging from a parasail tow line and then be winched back down to a boat.

For recovery the UAV engages the cable approximately half way between the ship and the parasail by deflecting the cable into a latching hook mechanism.

One preferred method of recovery is for the UAV to fly into and latch onto cables hanging from a parasail tow line and then be winched back down to a boat.

For recovery the UAV engages the cable approximately half way between the ship and the parasail by deflecting the cable into a latching hook mechanism.

The resulting recovery approach has the following characteristics;

### A) Safer, less sensitive to sea states and requires less pilot training.

Recovery is performed at a safe altitude away from the water, ship and ship's personnel and if the UAV misses the cable it simply goes around for another attempt.

The UAV's forward looking camera can be used for accurate guidance into the cable. The UAV avoids having to fly through the turbulent wake of the ship and is relatively unaffected by the pitching, rolling and heaving of the ship in higher sea states.

### B) Less potential for damage.

This system arrests the UAV over a greater distance than a conventional net system resulting in lower loads and the loads are applied at known UAV hardpoints. Arrestment loads are inversely proportional to the arrestment distance so that stopping a UAV in 100 feet takes only 10 percent of the loads of stopping it in 10 feet. The potential of the UAV impacting the ship or water is greatly reduced.

### C) More compact, easier to deploy, store and operate.

The proposed system is compact enough to be used on 25 foot long parasailing boats. Deploying the system consists of running two of the parachute risers up a 10 foot flagpole or manually holding open the mouth of the parachute which causes the chute to fill with air and the parachute is reeled out. To store the system, the parachute is reeled back in and the two upper risers are pulled down to deflate the chute. The parachute need not be carefully folded and typically the risers are chain knotted and then the chute is stuffed in a bag.

Unlike a net system the UAV after arrestment doesn't need to be disentangled from a net.

There is provided a simple, compact, inexpensive, lightweight and safer method of retrieving conventional fixed wing aircraft from a point location.

In certain preferred embodiments, some or all of the following advantages may be achieved:

The arrestment mechanism is provided up above any objects the UAV might otherwise run into and above any turbulent air from objects near the water or ground such as the ship's superstructure, trees, etc.

The aircraft flight path doesn't pass over the recovery ship to eliminate the potential that the aircraft might not firmly engage the recovery system yet be disturbed and crash land on the ship.

The recovery system exerts lower loads and inflicts less damage to the UAV and arrestment system.

The arrestment system is less affected by heavy seas and the pitching, heaving and rolling of the recovery ship.

The arrestment system may use a parasail.

The arrestment system achieves a firm latched engagement and is easier to disengage the UAV from the arrestment system after recovery.

The arrestment system can also provide other functions such as carrying sensors or antennas aloft for local area surveillance, communications, electronic intelligence or warfare or for getting steerable parachutes aloft that can be released for pilot parachute training or delivery missions.

Normal aircraft structure such as wings, fuselages and propeller guards or wires attached to these structures are utilized to guide the arrestment cable into engagement with a latching hook mechanism.

The recovery system can recover aircraft at a higher altitude to avoid ground fog or a lower altitude to be under the cloud cover.

The recovery system lowers the aircraft in a level attitude for example for easy transfer on its landing gear.

### DESCRIPTION OF THE DRAWINGS

FIG. 1 is a side view showing the launch approach.
FIG. 2 is a plan view looking down on an unmanned aircraft designed to be launched and retrieved with this invention. A portion of the release mechanism used for launch is also shown.
FIG. 3 is a view in side elevation taken along lines 3-3 in FIG. 2.
FIG. 4 is a side view of one embodiment of the invention showing different arrestment approaches.
FIG. 5 is a view of an alternative way to attach recovery lines to the parasail tow line.
FIG. 6 is a view of an alternative way to attach recovery lines to the parasail tow line.
FIG. 7 is a top plan view of FIG. 4.
FIGs. 8-10 are plan views of some other aircraft configurations for this invention.
FIG. 11 is an example of how this arrestment approach can be performed without a parasail holding up the arrestment lines by instead using cables strung between two poles.
FIGs. 12A, 12B, 12C show a variety of deployable lifting systems.
FIG. 13 is a view of an alternate embodiment of the invention featuring a rotating arm on the back of a ship for suspending arrestment lines.
FIG. 14 is a view from the rear of a ship in which the rotating arm is swung away from the ship.

### Launch Procedure

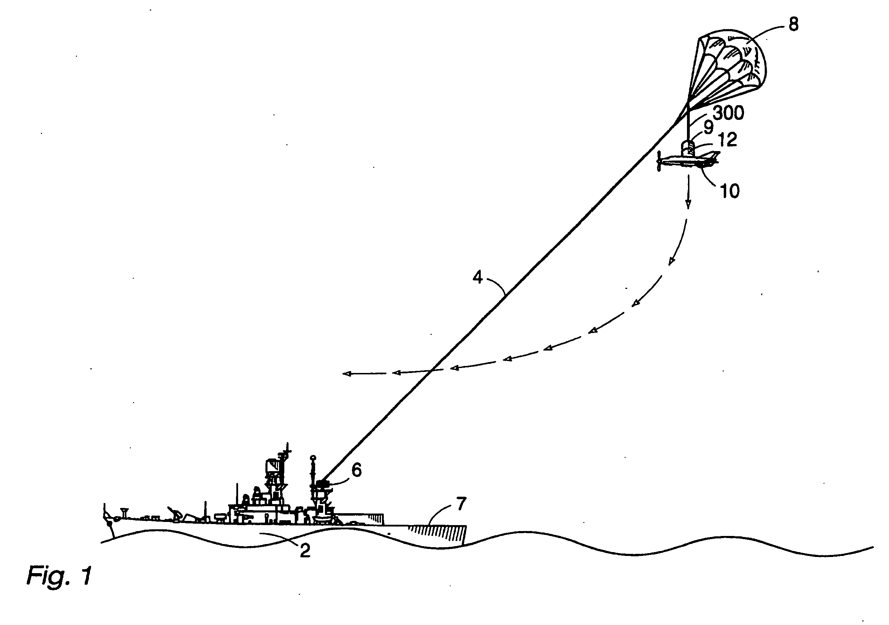

The launch procedure which is not part of the invention and not claimed will first be described by referring to Fig. 1 wherein there is shown a boat 2, a tow line 4, winch 6, parachute 8, plastic barrel of water as a ballast weight 9, unmanned aerial vehicle (UAV) 10 and release mechanism 12. The launch procedure starts by inflating the parachute 8 which can be done by raising its risers with a pole designed for this purpose which is well known in the art or by having persons hold up the separated riser bundles until the chute inflates in the wind. Because conventional parasailing parachutes need a weight hanging under them to keep them oriented properly after the UAV has been released, a barrel of water 9 or other weight is attached where a tourist would normally be attached to go up parasailing. Use of such a water ballast is well known in the art as a method used for training people to operate parasailing equipment. The release mechanism and structure 12 can be integrated onto the bottom of the ballast 9 or can be detachable from it. It also can be made heavy enough so as not to require additional ballast for the parasail. The alternative is to have a steerable type parasail with a remote control unit pulling the control lines in place of a paratrooper to keep the parasail oriented upright so its generating lift vertically.

For launch, the parasail is inflated first and then the ballast 9, release structure 12 and UAV 10 are combined and can either be raised so that straps 300 can be attached to the parasail harness in the conventional manner or the parasail harness can be pulled down to attach to the straps 300 as shown in FIG. 1. The straps 300 can also be attached when the parasail harness attach points on the left and right riser bundles are low enough to reach the straps 300 from the water barrel ballast 9 as is known in the art and then the system is raised into the air when the parasail is reeled out with the winch. With this later approach care may need to be taken to avoid excess swinging of the UAV and potential propeller contact with the deck.

The winch 6 then reels the parachute out until the UAV has reached sufficient altitude for a launch. It should be understood that the release structure can hold the UAV in a somewhat nose up attitude so the UAV's wings are also generating lift to assist in raising the combined system and it should also be understood that the UAV's propulsive system could also assist for example if it's a vectored thrust vehicle like the Harrier or if the UAV is held in a nose up attitude by the release mechanism. As the UAV is approaching launch altitude the remote pilot can verify the proper operation of the flight controls by moving the UAV's control surfaces and watching the vehicle respond which is facilitated by the airflow and some flexibility in the mounting of the UAV.

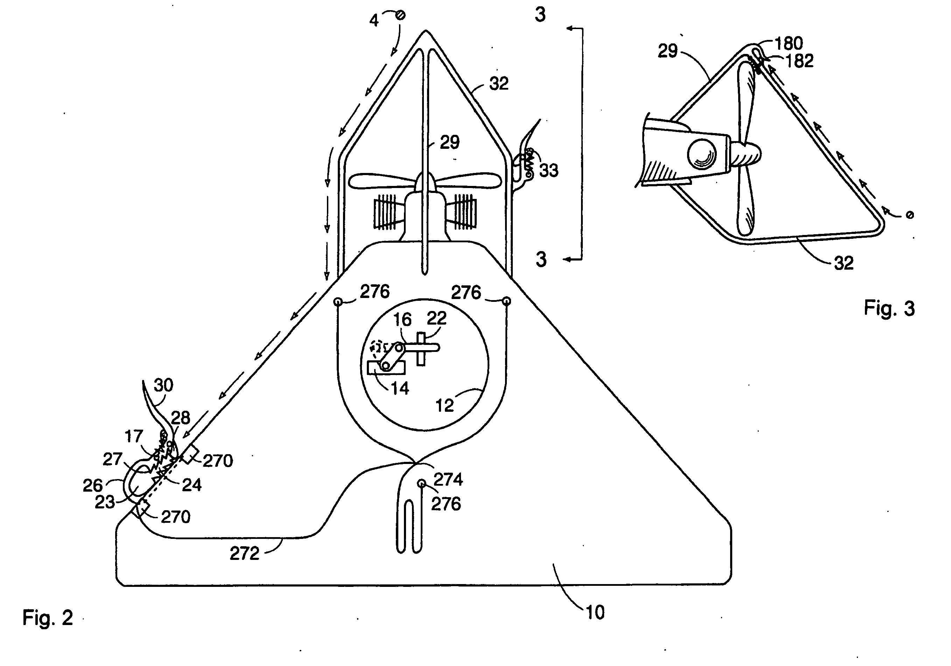

The engine is placed at idle and a signal is then sent to the release mechanism 12 either through an electrical line carried by the tow line 4 or a radio signal. The mechanism that releases the UAV may consist of actuator 14 and pin 16 which engages UAV mounted bracket 22 as shown in FIG. 2. UAV 10 is held up only by pin 16 passing through a hole in bracket 22 which is part of the UAV but sticks up above the UAVs outer mold-line and into a slot provided in the bottom of the release mechanism structure. For clarity, only the outline of the release mechanism structure 12 where it bears against the upper surface of the UAV 10 with a circular rubber seal is shown in FIG. 2. The release structure 12 will help stabilize the UAV 10 from pitching, rolling and yawing since it bears down on the upper surface of the UAV all around the attach bracket 22 with the rubber seal. It will of course be understood that the release mechanism could also be part of the UAV 10 as opposed to being attached to the parasail system.

To release the UAV, actuator 14 pulls pin 16 out of UAV mounted structural bracket 22 allowing the UAV to fall. The UAV picks up speed in a dive, power is applied to the engine and once sufficient airspeed is achieved the pilot pulls back on the control stick so the UAV will do a pull-up into level controlled flight. During this process the pilot performs a mild turn so the UAV won't fly into the tow line 4.

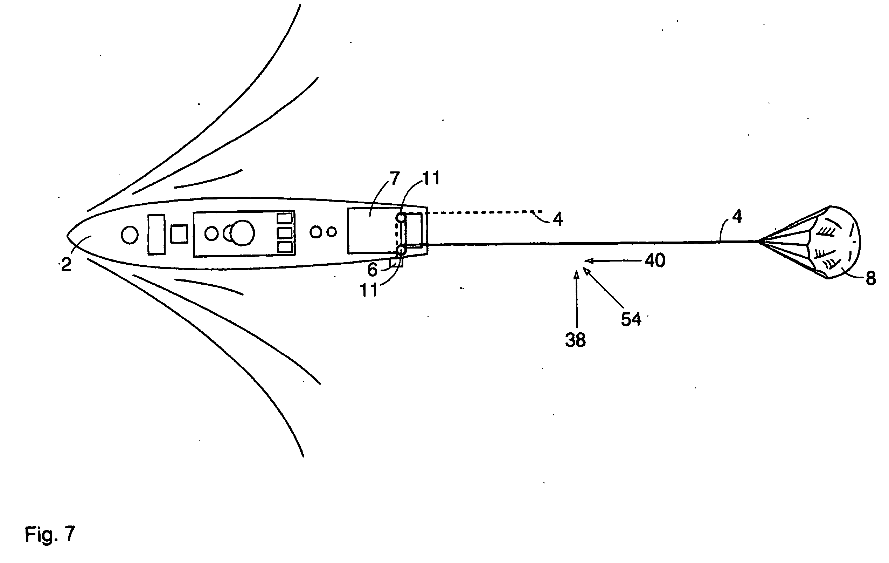

Although the winch 6 is shown on the highest deck of the ship in FIG. 1 it will very often be more advantageous to place the winch 6 on the ships flight deck 7. It can be advantageous to launch and retrieve the parachute on the upwind side of the flight deck 7 due to the air turbulence directly behind the ship's superstructure. FIG. 7 shows the preferred approach to do this where the winch 6 is mounted to the port side of the ship 2. The tow line 4 comes directly out of the winch 6 headed across the flight deck 7 toward the starboard side of the ship. The tow line 4 passes through a pulley assembly 11 which incorporates a hook that can be secured to an aircraft tie-down pad on the port side (as shown in solid lines) or the starboard side (as shown in dashed lines) so that it is easy to launch the parachute from the upwind side of the ship 2 without moving the winch 6 which might be connected to the ship's hydraulic system. The pulley assembly 11 preferably will never be located closer than 6 feet from the winch so as not to put too much side force on the level winder.

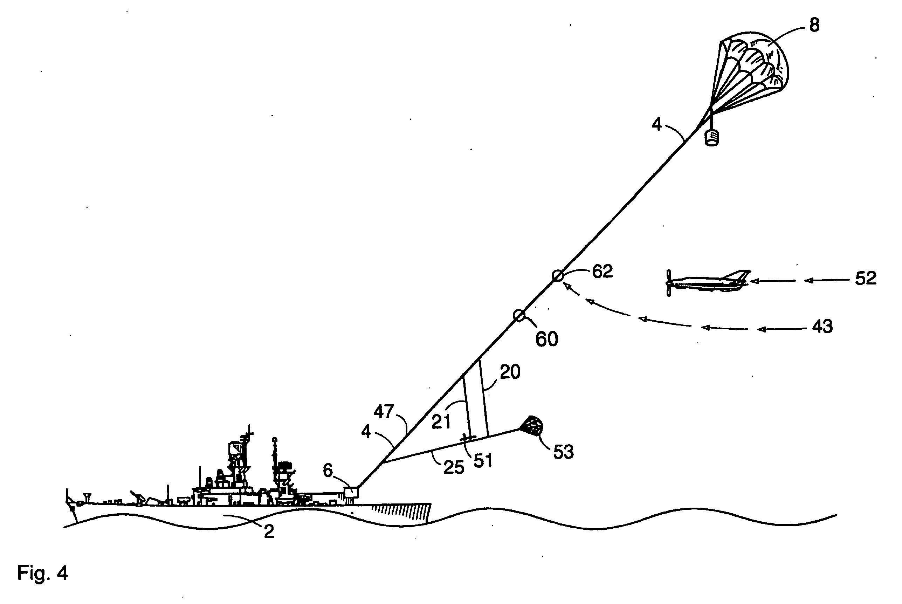

For the arrestment and recovery, the UAV 10 flies into and latches onto cables suspended below the parasail 8 as shown in FIG. 4. There are many different preferred configurations because the current invention is intended to be useable with all different sizes, configurations and structural designs of existing aircraft. For example with a small UAV the wingtip ends up being a good place to put a latching hook to engage one of the cables but larger aircraft do not naturally have enough structure at the wingtip to handle the arrestment loads. When the aircraft gets too heavy to manhandle by sailors on the deck then it is desirable to have the latching mechanism near and preferably above the vehicles center of gravity so that it hangs level or can be leveled by hand and lowered onto its landing gear or a ground trolley.

### DESCRIPTION OF THE PREFERRED EMBODIMENTS

### Arrestment-Preferred Approach

For the arrestment, the preferred approach is for the vehicle to fly into and latch onto a net or multiple lines hanging down from the tow line 4 approximately half way between the parasail and the ship and with the UAV flying at right angles to the direction of travel of the ship as shown by flight path 38 in FIG. 7. The multiple lines make a larger, easier target for the pilot. In order to make sure that the lines do not blow open wide enough to miss the UAV's latching mechanisms the vertical lines can be connected with horizontal lines to effectively form a net and/or tension can be created on the lines such as shown with lines 20,21 in FIG. 4 where rope 25 connecting the bottoms of lines 20,21 can be of relatively large diameter to add some weight and stiffness and/or a small parachute 53 can provide tension in line 25 and in turn a download on lines 20,21.

### Preferred Flight Path

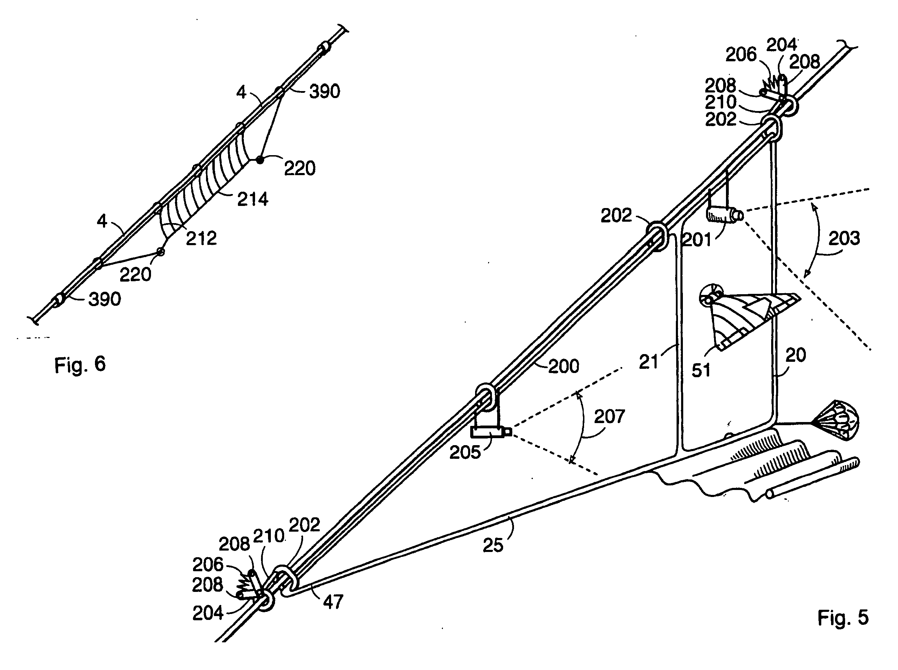

The preferred flight path of the UAV for engagement is at right angles to the direction of travel of the ship as shown by arrow 38 in FIG. 7. In this manner a level approach can be used and the arrestment energy is absorbed primarily by deflecting the tow line to the side. It also makes it the easiest to hang a net or series of vertically hanging lines on the tow line 4 at right angles to the direction of flight of the UAV 10. It also makes it easier for the UAV pilot to find the arrestment point if a banner or flag is used since the wind will blow it out at right angles to his line of sight. Also if the UAV was not properly captured but falling out of control it wouldn't land on the ship. The UAV pilot will generally fly the aircraft into engagement using a forward looking camera onboard the aircraft. However if the onboard camera fails, gets fowled by oil or water or whatever a camera 201 and/or 205 can be placed on the tow line or recovery lines above and to the side of the intended arrestment point as shown in FIG. 5 and looking in the direction of the oncoming aircraft with field of views 203 and 207 to help the pilot steer the aircraft in. Also the image from these cameras 201 and 205 can be flipped electronically left to right and right to left before being displayed to the remote pilot so that the pilot can fly the aircraft as if its flying away from him instead of flying towards him which is much more natural. In the configuration shown in FIG. 5 the remote pilot would fly the aircraft so that it flies directly below camera 201. It will be noted that at some point the aircraft passes out of camera 201's field of view. Camera 205 can be helpful in better gauging the proper height than using camera 201 by itself and in fact one pilot watching the image from camera 205 could concentrate on keeping the aircraft at the correct altitude while the other pilot looking through camera 201 concentrates on keeping it centered left to right. If only camera 201 is utilized then it is advisable, in order to help the pilot best gauge the proper aircraft height and hit the center of the arrestment lines, to paint straight vanishing lines on the pilot's display that trace the ideal location of the aircraft's wingtips during the approach as the wingtips get farther and farther apart and lower on the display screen. Cameras to the left and right of the ideal arrestment point and at the correct height can also be very effective.

### Delta Wing Configuration

In the configuration shown in FIG. 2, lines such as 20,21 contact the leading edge of the UAV 10 and are deflected out to the wingtip where they engage a hook 26. A spring loaded latch 28 may be positioned at the entry point of hook 26 which deflects out of the way and then snaps closed to trap tow line 4 inside hook 26. The hook 26 may have a forward swept extension 30 on the outboard side that could first deflect the cable inboard before engaging the hook 26. For a straight winged aircraft a wire can be strung from the nose of the aircraft, or along the fuselage, to the wingtip to drive the cable out to the hook to simulate the leading edge of a delta wing. Hook 26 may be permanently attached at the wingtip or may be retained with tape 270 that is designed to tear under the load of an engagement. In this later case, as shown in FIG. 2, the hook 26 would be attached to cable 272 which in turn is attached to a three cable harness 274 which attaches to three or more hard points 276 on the top surface of the aircraft and is also taped in place until the arrestment loads pull it free. With this approach, after the arrestment, the aircraft 10 ends up being suspended in a level attitude below the harness in the same manner used for parasail deployments.

### Hook Retaining

Although it is very desirable to have a latching mechanism which allows a simple hook design, it is not absolutely mandatory because of the location and design of this hook. The center of gravity of the UAV is approximately at bracket 22 so the arrestment loads and loads to support the UAV after arrestment will in general both be continuing to try to force the tow line 4 into the hook 26 and not trying to pull it out. In addition, for example, the force of the arrestment might drive the tow line 4 through the throat 24 of the hook even though the line 4 is larger in diameter than the throat 24. This can be done by either compressing the line 4 or the temporary enlargement of the throat 24 due to the arrestment loads causing the hook 26 to flex open. As a result the line 4 will not pass back out through the throat 24 without a significant load being applied. With enough flexibility in hook 26, throat 24 might be totally closed except when the line 4 forces it open in order to pass through. Inner throat 23 might be larger, the same size or smaller than outer throat 24 and might essentially have an inner hook 27 so its difficult for the line 4 to find its way out of the hook 26. Also barbs 17 on hook 26 might further restrain the line 4 from exiting the hook 26. For extremely light micro-UAVs, even Velcro or magnets might be strong enough to provide the engaging mechanism in place of hook 26.

For tractor propeller UAV configurations such as shown in FIGs. 2 and 3, a propeller guard 32 may be used to deflect the line 4 around the propeller. In addition, placing the latching mechanism 26 on the wingtips a latching mechanism can also be placed on the propeller guard as illustrated by hook and latching mechanism 33 in FIG. 2. This adds some weight up forward which helps if the aircraft has an aft center of gravity problem and reduces the need for substantial structure out at the wingtips but the narrower spacing between the left and right ends of the propeller guard means that the arresting system needs more vertically suspended lines spaced closer to each other to make sure that at least one line will be deflected by the propeller guard into engagement with a latching hook 33. Latching hooks could also be placed on the propeller guard rods 29 above or below the propeller to deflect and capture horizontal lines in the net. It is best to deflect lines in the direction of the least resistance to assure a successful engagement. If a net is hanging from the tow line 4 without any devices such as small parachutes or weights at the bottom of the net to provide tension or a restraint to the bottom of the net then the least direction of resistance is toward the tow line 4. If the UAV is using flight path 38 then up and/or to the left toward the tow line 4 is the preferred direction to deflect the cable. FIG. 3 shows a side view of the nose of the aircraft in FIG. 2 and shows how propeller guard 29 is designed to push a line of the net up and into engagement with hook 180. After engagement the net will want to pull up and aft relative to the aircraft so hook 180 has a top spike 182 that prevents the line from going up and forces it to go aft into the mouth of the hook 180.

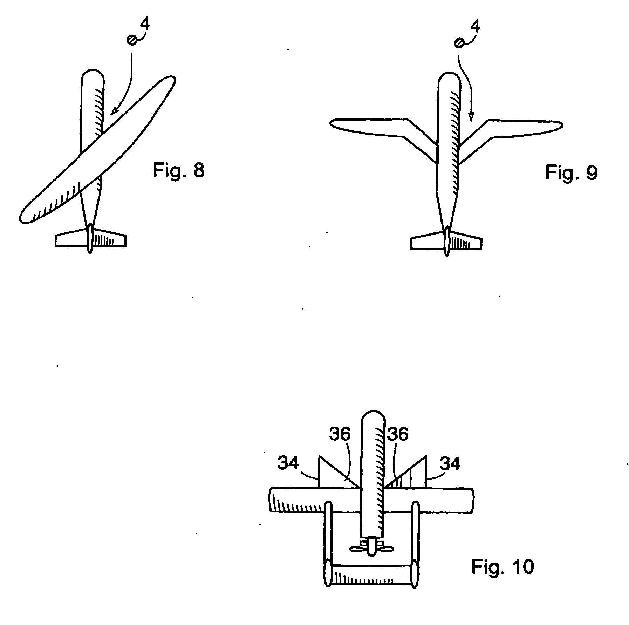

FIGs. 8-10 show a number of UAV configurations designed to deflect the cable in to the wing root which is very close to the center of gravity and where the structure is naturally very strong. For example, a forward swept wing will naturally tend to deflect the tow line 4 in toward the wing root area. The UAV configuration in FIG. 9 has a forward swept wing out to about half span and the configuration in FIG. 10 achieves the same effect by adding forward pointing rods 34 and wires 36 to deflect the cable into the latching hook at the wing root. Alternatively, a wire from the aircraft's nose to a wingtip could drive the cable out to a latching mechanism at the tip similar to that described for delta wing aircraft. For stowage onboard ship it can be desirable to have a UAV where the wing can be rotated 90 degrees to lay flush over the fuselage. For this kind of configuration prior to arrestment, the wing could be rotated up to 45 degrees such as shown in FIG. 8 in order to direct the tow line 4 into a latched engagement by the wing root. The arrestment line configuration that is shown in FIG. 5 also can help drive the arrestment lines 20,21 into the vehicles wing root area since line 25 will go tight after an engagement and start pulling the bottoms of line 20,21 to the left toward the aircraft's wing root area.

For the configurations such as those described in Figure 2, 8, 9 and 10, there is at least a 15 degree swept back or 20 degree swept forward angle on the leading edge of the aircraft's wing or other lateral deflecting structure in order to more reliably deflect the arresting cable to the hook independent of normal aircraft yaw angles. In most of the configurations described so far the UAV is designed to deflect a cable laterally inboard or outboard relative to the UAV and into engagement with a latching hook.

Flight paths 52 in FIG. 4 and 54 in FIG. 7 are examples of intersecting the arresting cables at an intermediate angle. An engagement using flight path 52 as shown from the side in FIG. 4 and flight path 40 as seen from above in FIG. 7 represents what will be called a co-incident engagement where the aircraft is flying level and in the same direction of travel as the parasail 8 and overtaking the parasail 8 and tow line 4 from the rear.

Referring to FIG. 4, flight path 43 achieves a perpendicular engagement by doing a pull up or sustained climb prior to engagement. If a pull-up is used, the pilot might time the maneuver for example by using the forward looking camera to fly at a point 60 marked on the tow line 4 such as with a strobe or flag until another point 62 is at the top of his video screen at which point he would do a pull-up to intersect the tow line 4 just below point 62 or some other marked spot on the tow line 4.

A perpendicular engagement can also be achieved with a level flight path in a number of different ways.

The preferred approach is to fly into engagement at right angles to the direction of travel of the parasail using flight path 38 and either engaging the tow line 4 directly or lines hanging off the tow line 4. It is also understood that the aircraft could engage lines hanging directly below the parasail.

In a second approach, prior to engagement the winch can be released so the cable plays out very rapidly and the tow line 4 hangs near vertical below the parachute. The UAV 10 then engages the cable from any direction and swings up on the cable and the winch then takes up the slack.

Modem winches can reel in at high speeds. The approach of letting the tow line go slack prior to the arrestment leads to very low loads and long arrestment distances.

Also modem parasailing winches will automatically reel out at a pre-set braking force if the load in the tow line 4 exceeds the pre-set force level. This also will reduce the loads and absorb some of the arrestment energy. This pre-set braking force can be lowered enough so that the tow line is playing out prior to the arrestment. This can steady the arrestment cables or net so its not affected as much by the heaving of the ship. Alternatively, the winch 6 can also eliminate the movement of the arrestment point due to the heaving of the ship by reeling in and out to compensate to make the pilot's job easier. The winch could be operated in this manner manually or automatically for example with the control system obtaining feedback from an accelerometer hung on the tow line 4 and trying to minimize the accelerations sensed by the accelerometer parallel to the tow line 4. Alternatively, the accelerometers could be located at the net or recovery lines to directly sense any accelerations and activate the winch or vary the lift and drag of the parasail to minimize those accelerations.

For a heavy UAV, line 25, as seen in FIGs. 4 and 5, can be disconnected from tow line 4 at point 47 and taken by a crew member inside the hangar and attached to a winch so the UAV 51 can be winched into the hangar or out for launch without even touching down on the flight deck. This is possible because the UAV would still be suspended from line 21 on one side and line 25 inside the hangar. For a small boat, line 25 could be used to pull the UAV forward to the back of the boat before it would otherwise land in the water behind the ship. An alternative to this is to have a winch at the top of line 20 or 21 where it attaches to tow line 4 that could retract line 20 or 21 and pull the aircraft up to the tow line 4. An additional alternative is to replace the winch with a pulley and have line 20 or 21 pass through the pulley and then extend down the tow line so that personnel on the flight deck can grab the end of the line and pull the aircraft up to the tow line 4 before it might contact the water behind the ship.

There are several approaches to prevent the UAV from sliding all the way down off the arrestment cables 20,21.

The first approach is to have the inner throat of the latching hook 26 as shown in FIG. 2 smaller than the diameter of the tow line 4 so as to generate a sufficient amount of braking force.

Another approach is to have a fixed or sliding stop on the tow line 4 which could also be padded to reduce any shock loads as the UAV contacts the stop. A sliding stop could be designed to provide a fixed amount of clamping or braking force on the tow line 4 or might be attached by a line to a small parachute to provide all or part of the braking force or might just be a padded compressible material wrapped around the bottom 30 feet of the tow line 4 to cushion any remaining downward velocity of the UAV.

For the preferred configuration where the arrestment cables 20,21 are used the UAV 51 cannot slide off the bottom of the cables due to cable 25 connecting the two at the bottom and in addition rigid stops may be placed on the line such as knots in the line that are too large to pass through the throat of the latching hook. The cables 20, 21 at the top end would preferably be attached to tow line 4 as shown in FIG. 5 through a sliding attachment which like a sliding stop is designed to brake against tow line 4 and absorb any kinetic energy parallel to the direction of travel of the tow line 4. Lines 21, 20 and 25 attach to line 200 which assures the proper spacing between these three lines at their upper ends. Line 200 in turn is attached to tow line 4 with ring caribeaners 202 that can slide along tow line 4. To hold this assembly of lines as shown and prevent it from sliding down the tow line, braking mechanism 204 is provided which work like pliers and encircle the tow line 4 like clothes pins. To attach the braking mechanism 204 to the tow line the two handles 208 are spread so that the jaws of the device open enough to be placed around the tow line 4. The handles are then released and springs 206 act to pull the two handles of the braking mechanism 204 together causing the jaws to trap and clamp down on the tow line 4. A rod 210 connects the braking mechanism 204 to the adjacent ring caribeaner 202 and hold the braking mechanism 204 in the proper position at right angles to the tow line 4 for a consistent braking force. The preferred arrestment flight path for this system is shown by flight path 38 in FIG. 7. However if the UAV 51 engages lines 20 or 21 with too high a component of velocity parallel to the tow line 4 such as with flight path 54 as shown in FIG. 7 then braking mechanism 204 slides along the tow line 4 absorbing this energy and preventing peak loads that might damage the UAV or the arrestment system.

It is understood of course that there could be more than just the two arrestment lines 20,21. Also in FIG. 6 is an alternate approach where arrestment lines 212 are strung between tow line 4 above and line 214 below. The primary difference in this configuration is that the tension in the arrestment lines 212 are maintained by small weights 220 which hold line 214 down and taut whereas line 25 was held down and taut by parachute 53. Also instead of braking mechanisms 204, bungee cords 390 hold the net in place lengthwise along the tow line and reduce any shock loads parallel to the tow line.

Most ships wishing to operate UAVs are orders of magnitude larger than parasail boats and much less maneuverable and responsive and also don't want to have to slow down, speed up or change direction if possible in order to launch or recover a UAV. As a result, it would be advantageous to have a variable geometry parasail that could increase or decrease its lift and drag independent of relative airspeed. It is believed that this can best be achieved using a variation on a technique used for slowing down the opening of a parachute for load control.

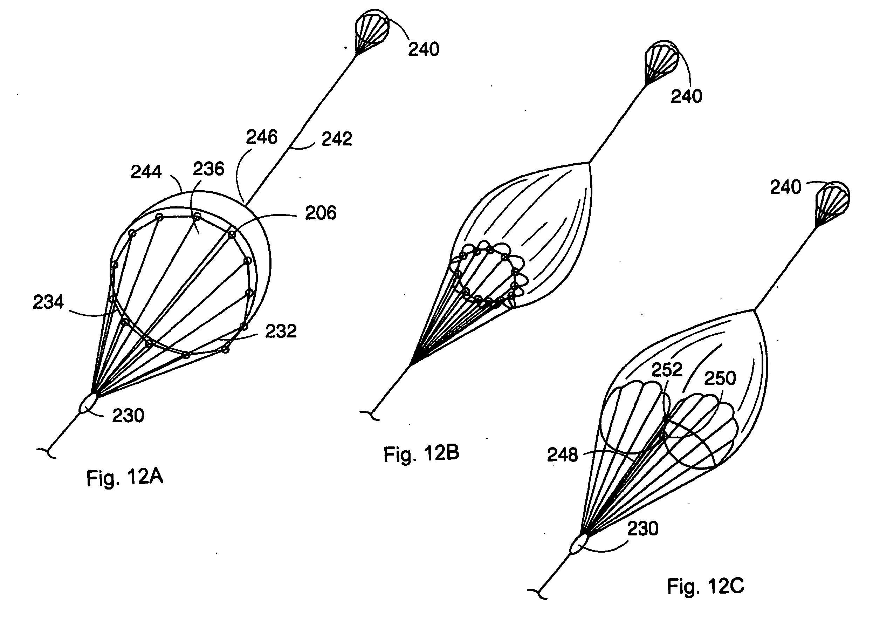

FIG. 12A shows a parasail 244 that is fully inflated. Remote control unit 230 contains a winch that can reel in or out lines 232 and 234 which in turn pass back and up to the left and right rim of the parasail canopy. Line 232 passes through a pulley and then passes up around the mouth of the parasail canopy through rings 206 attached to each riser and line 234 passes down around the mouth of the parasail canopy. By reeling in lines 232 and 234, remote control unit 230 can close down the parasail mouth such as shown in FIG. 12B in order to reduce the lift and drag of the parasail. This technique is very effective and can greatly reduce the load on the parasail and tow lines. This system has the advantage that the ship can now operate over a much wider speed range without worrying about either having too little parasail lift or too much load or drag on the system. Also only one parasail size is required to launch and recover different sized UAVs or carry various size payloads aloft. After a UAV launch the parasail lift and drag can be reduced to make it easier to pull back down. This system also allows inflation of very large parasails on the flight deck in high winds in a safer more controlled manner by starting with the mouth of the parasail 236 mostly closed down but the parasail lifted into the air by smaller parasail 240 pulling on and lifting line 242 which passes through and is attached to the center of the parachute at 246. Also after the parasail has been winched back down onto the flight deck this system provides one of the best approaches for deflating the parasail in high winds by totally closing off the mouth 236. A small winch in remote control unit 230 can let out line 242 so that parachute 240 will pull back at the center of the parasail 244 at point 246 to further deflate the chute, pull the parasail fabric back in a streamlined manner and keep the parasail material from flapping excessively or getting tangled. With an automated approach the parasail risers and parasail 244 can be retracted all the way onto the winch 6 used to extend and retract the tow line 4. For launching parasail 240 would be deployed in a conventional manner and it would pull the much larger parasail 244 off of the winch 6.

Parasail 244 would also be steerable as is known in the art for paratroop parachutes and remote control unit 230 would have small winches that pull left and right control lines in place of having a paratrooper doing it to keep the parasail in the correct rolled attitude to provide lift vertically. This eliminates the need for ballast which would also make it very difficult to roll the parasail 244 onto the winch 6. Without any ballast required only a very small amount of relative wind would be required to keep the parasail aloft between launches or recoveries. If a lighter than air and preferably a hot air balloon were integrated with this system then the ship could go for long periods and operate in absolute zero relative wind conditions without having to reel the system back in. It is also understood that in addition or as an alternative to closing down the mouth of a parasail that the lift and drag of the parasail 244 can be varied by pulling or releasing symmetrically the control lines for the steerable parasail which results in symmetrically opening or closing the parasail control vents which is known in the art. Still another alternative is shown in FIG. 12C. In this configuration remote control unit 230 pulls on line 248 which passes through pulleys 250 and 252 at the bottom and top of the parasail canopy rim. By pulling in line 248 remote control unit 230 can pull the top and bottom of the canopy rim together in the middle and partially close down the parasail mouth and reduce the parasail drag.

Another approach to keeping a large towed deployable lifting system up all the time to avoid frequent inflation and deflation and not restrict the direction and speed of the ship is to use a parafoil system 260. The parafoil is steered by remote control unit which pulls control lines which is known in the art. In low or zero relative wind conditions the system would be unable to launch or recover a UAV but an electric motor driving a propeller could be powered through the tow line 4 to propel the parafoil to fly back and forth or in circles just fast enough to keep the system in the air.

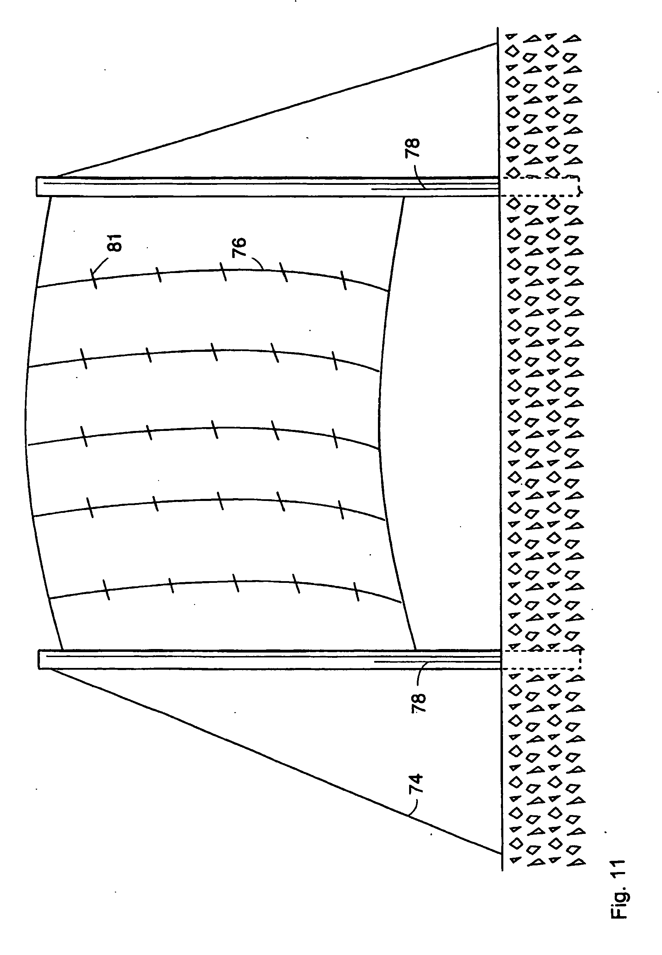

Although the preferred approach to hold up the lines to engage the UAV for arrestment is to use a deployable lifting surface such as a parasail it should also be understood that the aircraft could latch onto lines suspended between poles mounted in the ground as shown in FIG. 11. For example the same techniques described previously to engage the slanted parasail tow line 4 or lines 20, 21 could be used to engage slanted guy line 74 or vertical lines 76 in FIG. 11. Line 74 is an example where stops are not used while lines 76 are shown with stops 81 to prevent the UAV from sliding down the lines. These stops 81 for example can consist simply of a knot in the line with or without a washer resting on top of it or it could consist of a ring around the line that squeezes down on the line to generate friction to hold it in place or to slide along the line with energy absorbing drag. The energy absorbing mechanisms for this deck mounted system are flexible supporting posts 78 which can bend without breaking and the elasticity inherent in the lines 74, 76.

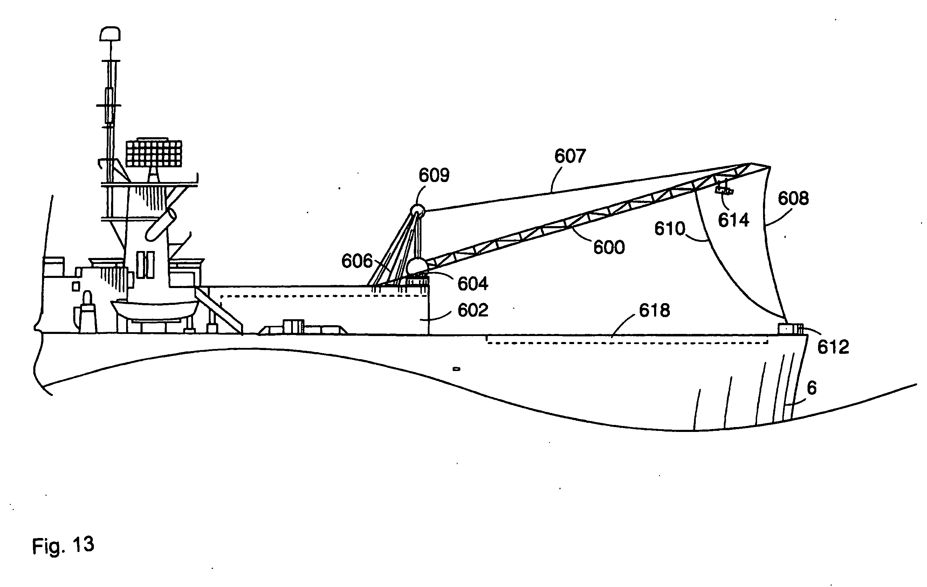

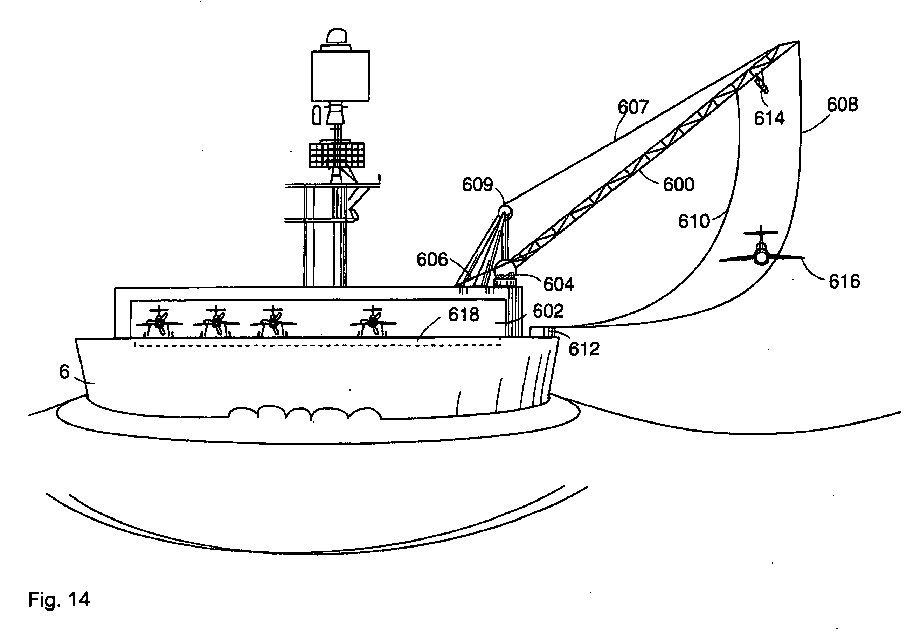

As an additional different embodiment, arrestment lines could be suspended from the end of a rotating arm attached to the superstructure of a ship. FIGs. 13 and 14 show an example of a rotating arm extending from a ship for suspending the recovery system. Beam 600 is attached to the side of the ship's hangar 602 from a rotating base 604. A line 606 controls the horizontal movement of beam 600 from an aft position to a position extending laterally from the ship as shown in FIG. 14 and a line 607 supports the beam 600 and controls the vertical movement of the beam. A winch 609 can reel in or out line 607 in order to raise or lower the boom and by alternately reeling in and out can take out the effect of the rolling of the ship in heavy seas. The winch 609 can be controlled manually to perform this function or can be performed by an automatic system that for example measures the slope of the beam and drives the winch 609 to for example keep the beam level as the ship rolls. Arrestment lines 608 and 610 are suspended from the beam 600 at their upper end and connect down to an arrestment engine 612 which is known in the art as a way to absorb energy for net or cable recovery systems. Some of these arrestment engines use a paddle in a drum of water and they would allow lines 608 and 610 to be pulled off of a reel with a braking force.

The aircraft 616 is flown into and engages vertically hung arrestment lines 608 and/or 610 as previously described while flying in the same direction as the ship and the ship is preferably oriented directing into the wind. Beam 600 would be oriented in a laterally extending position in relation to the ship. The aircraft 616 may be guided by its internal camera or a centerline camera 614 on the boom 600 can also be used by the pilot to steer the aircraft in. After the aircraft 616 engages the cables 608 and/or 610 the boom 600 swings forward as the aircraft 616 is slowed to a stop. Stops, as described above, are placed on the lines 608,610 to prevent the aircraft 616 from falling into the water after the arrestment. Line 606 is then manipulated so that boom 600 can be rotated over the flight deck 618 so that the aircraft 616 can be retrieved from the recovery system.

Another approach for land based use is to use lighter than air such as helium or hot air as the lifting system. A lighter than air approach gets very large however unless it is used in combination with a parasail type system so the lighter than air lift required is only enough to get the parasail and tow line 4 aloft in zero wind conditions.

## Claims

1. In combination, an aerial recovery system for an aircraft and an aircraft (10; 51; 52; 616);
said aerial recovery system comprising at least one arrestment line (20; 21; 76; 121; 212; 608, 610) held up at at least an upper end by a support structure (8 ; 78 ; 600), a lower end of the arrestment line being restrained;
said aircraft having a capturing device (26) for capturing said line and a deflecting structure for deflecting said line laterally into engagement with said capturing device;
**characterized in that** the support structure (8; 78; 600) extends from an upper suspension point for the arrestment line to a base, and that the deflecting structure comprises a wing of said aircraft, said deflecting structure having at least a 15 degrees swept back or 20 degrees swept forward angle to more reliably deflect said arrestment line laterally to said capturing device.

2. The combination of claim 1, **characterized in that** the capturing device (26) is a hook.

3. The combination of claim 1, **characterized in that** the support structure comprises a deployable lifting apparatus and a tow line (4) connecting the lifting apparatus to the base.

4. The combination of claim 3, **characterized in that** the lifting apparatus comprises a parasail or parachute (88), a parafoil (260), a steerable parasail (244) or parafoil (260), or a propelled parafoil.

5. The combination of claim 1, **characterized in that** the support structure (78; 600) is selected from the group comprising another line strung between two poles (78), and an arm or beam (600).

6. The combination of claim 5, **characterized in that** said arm or beam is rotatable.

7. The combination of claim 1, **characterized in that** the line (20; 21; 76; 212; 608, 610) is a cable.

8. The combination of claim 1, **characterized in that** the capturing device (26) comprises a hook on the wing of the aircraft, the hook including a line retaining throat (24).

9. The combination of claim 1, **characterized in that** the capturing device includes an inner throat (23) smaller than the diameter of the line so as to generate a sufficient amount of braking force such that after the line is intercepted by the capturing device, sliding of the line through the capturing device is substantially arrested.

10. The combination of claim 1, **characterized in that** an energy absorbing device (6; 53; 78; 204; 220; 612) is attached to the lower end of the line.

11. The combination of claim 1, **characterized in that** the base comprises a water craft (2).

12. The combination of claim 1, **characterized in that** the base comprises the ground.

13. The combination of claim 1, **characterized in that** the capturing device (26) is positioned at a forward inboard edge of a wing root of said aircraft.

14. The combination of claim 1, **characterized in that** the arrestment line (76) is held up by a pole (78).

15. The combination of claim 1, **characterized in that** said arrestment line (76) is supported in the air by another line strung generally horizontally between two poles (78).

16. The combination of claim 1, **characterized by** further comprising a sensor or camera (201, 205; 614) for guidance in manoeuvring said aircraft into engagement with said arrestment line.

17. The combination of claim 16, **characterized in that** the sensor or camera (201, 205; 614) is attached to the support structure or arrestment line.

18. The combination of claim 1, **characterized in that** the capturing device (26) is positioned forward of a line defined by the leading edge of the wing inboard of said capturing device (26).

19. The combination of claim 1, **characterized in that** structure is provided to assist in raising of the arrestment line (20, 21), with said aircraft (51) attached to said arrestment line, relative to said support structure (8).

20. The combination of claim 1, **characterized in that** structure is provided to bring together said aircraft (51) and protective structure to protect said aircraft.

21. The combination of claim 1, **characterized in that** said support structure (600) is itself supported by a pivotable base connected to a ship or connected to ground.

22. The combination of claim 21, **characterized in that** said pivotable base is pivotable about a generally vertical axis.

23. A method for capturing an aircraft (10; 51; 52; 616), comprising:
positioning an arrestment line (20; 21; 76; 121; 212; 608, 610) across the flight path of the aircraft in a generally vertical orientation;
guiding a lateral deflecting structure of the aircraft to strike the line, the lateral deflecting structure comprising a wing of the aircraft and being swept back at least 15 degrees or swept forward at least 20 degrees to more reliably deflect said line laterally to a capturing device,
decelerating the aircraft under the restraint of the line while absorbing kinetic energy from the aircraft at a lower end of the line,
and removing the aircraft from the line.

24. The method of claim 23, **characterized by** at least partially controlling deflection of the line by at least one of a structure designed to flex (78), structure designed to brake (6; 204; 612), and an elastic cord (390, 391).

25. The method of claim 23, **characterized by** positioning the capturing device (26) on the aircraft forward of a line defined by the leading edge of the wing inboard of the capturing device (26).

26. The method of claim 23, **characterized in that** said aircraft (51) and arrestment line (20, 21) are raised relative to the support structure (8) supporting the arrestment line prior to the aircraft being removed from the arrestment line.

27. The method of claim 23, **characterized in that** said aircraft (51) and protective structure to protect said aircraft are brought together.

28. The method of claim 27, **characterized in that** said aircraft (51) and said protective structure are brought together before said aircraft is released from the recovery system.

## Patentansprüche

1. In Kombination, ein Luft-Bergungssystem für ein Flugzeug, und ein Flugzeug (10 ; 51 ; 52 ; 616) ;
wobei das Luft-Bergungssystem mindestens eine Arretierleine (20 ; 21 ; 76 ; 121 ; 212 ; 608, 610) umfasst, die mindestens an einem oberen Ende von einer Tragstruktur (8 ; 78 ; 600) hochgehalten wird, wobei ein unteres Ende der Arretierleine festgehalten wird ;
wobei das Flugzeug eine Fangeinrichtung (26) zum Fangen der Leine und eine Ablenkstruktur zum seitlichen Ablenken der Leine in Eingriff mit der Fangeinrichtung aufweist ;
**dadurch gekennzeichnet, dass** die Tragstruktur (8 ; 78 ; 600) sich von einem oberen Aufhängungspunkt für die Arretierleine zu einer Basis erstreckt und dass die Ablenkstruktur eine Tragfläche des Flugzeugs umfasst,
wobei die Ablenkstruktur einen um mindestens 15 Grad rückwärts gepfeilten oder 20 Grad vorwärts gepfeilten Winkel aufweist, um die Arretierleine zuverlässiger seitwärts zu der Fangeinrichtung abzulenken.

2. Kombination nach Anspruch 1, **dadurch gekennzeichnet, dass** die Fangeinrichtung (26) ein Haken ist.

3. Kombination nach Anspruch 1, **dadurch gekennzeichnet, dass** die Tragstruktur eine entfaltbare Hebevorrichtung und ein Schlepptau (4) umfasst, das die Hebevorrichtung mit der Basis verbindet.

4. Kombination nach Anspruch 3, **dadurch gekennzeichnet, dass** die Hebevorrichtung einen Gleitschirm oder Fallschirm (88), ein Gleitsegel (260), einen lenkbaren Gleitschirm (244) oder Gleitsegel (260) oder ein angetriebenes Gleitsegel umfasst.

5. Kombination nach Anspruch 1, **dadurch gekennzeichnet, dass** die Tragstruktur (78 ; 600) aus der Gruppe ausgewählt ist, die eine andere, zwischen zwei Pfosten (78) gezogene Leine sowie einen Arm oder Träger (600) umfasst.

6. Kombination nach Anspruch 5, **dadurch gekennzeichnet, dass** der Arm oder Träger rotierbar ist.

7. Kombination nach Anspruch 1, **dadurch gekennzeichnet, dass** die Leine (20 ; 21 ; 76 ; 212 ; 608, 610) ein Kabel ist.

8. Kombination nach Anspruch 1, **dadurch gekennzeichnet, dass** die Fangeinrichtung (26) einen Haken an der Tragfläche des Flugzeugs umfasst, wobei der Haken eine Leinenrückhalteverengung (24) beinhaltet.

9. Kombination nach Anspruch 1, **dadurch gekennzeichnet, dass** die Fangeinrichtung eine innere Verengung (23) beinhaltet, die kleiner als der Durchmesser der Leine ist, um einen ausreichenden Bremskraftbetrag zu erzeugen, sodass, nachdem die Leine von der Fangeinrichtung abgefangen wurde, ein Rutschen der Leine durch die Fangeinrichtung im Wesentlichen gestoppt wird.

10. Kombination nach Anspruch 1, **dadurch gekennzeichnet, dass** eine Energieabsorptionseinrichtung (6 ; 53 ; 78 ; 204 ; 220; 612) an dem unteren Ende der Leine befestigt ist.

11. Kombination nach Anspruch 1, **dadurch gekennzeichnet, dass** die Basis ein Wasserfahrzeug (2) umfasst.

12. Kombination nach Anspruch 1, **dadurch gekennzeichnet, dass** die Basis den Erdboden umfasst.

13. Kombination nach Anspruch 1, **dadurch gekennzeichnet, dass** die Fangeinrichtung (26) an einer vorderen Innenbordkante einer Tragflächenwurzel des Flugzeugs positioniert ist.

14. Kombination nach Anspruch 1, **dadurch gekennzeichnet, dass** die Arretierleine (76) von einem Pfosten (78) hochgehalten wird.

15. Kombination nach Anspruch 1, **dadurch gekennzeichnet, dass** die Arretierleine (76) durch eine andere, generell horizontal zwischen zwei Pfosten (78) gespannte Leine in der Luft getragen wird.

16. Kombination nach Anspruch 1, **dadurch gekennzeichnet, dass** sie weiter einen Sensor oder eine Kamera (201, 205 ; 614) zur Führung beim Manövrieren des Flugzeugs in Eingriff mit der Arretierleine umfasst.

17. Kombination nach Anspruch 16, **dadurch gekennzeichnet, dass** der Sensor oder die Kamera (201, 205 ; 614) an der Tragstruktur oder Arretierleine befestigt ist.

18. Kombination nach Anspruch 1, **dadurch gekennzeichnet, dass** die Fangeinrichtung (26) vorwärts von einer durch die Vorderkante der Tragfläche innenbords von der Fangeinrichtung (26) definierten Linie positioniert ist.

19. Kombination nach Anspruch 1, **dadurch gekennzeichnet, dass** eine Struktur vorgesehen ist, um beim Anheben der Arretierleine (20, 21), wobei das Flugzeug (51) an der Arretierleine befestigt ist, bezüglich der Tragstruktur (8) zu helfen.

20. Kombination nach Anspruch 1, **dadurch gekennzeichnet, dass** eine Struktur vorgesehen ist, um das Flugzeug (51) und eine Schutzstruktur zusammenzubringen, um das Flugzeug zu schützen.

21. Kombination nach Anspruch 1, **dadurch gekennzeichnet, dass** die Tragstruktur (600) selbst von einer mit einem Schiff oder mit dem Erdboden verbundenen schwenkbaren Basis getragen wird.

22. Kombination nach Anspruch 21, **dadurch gekennzeichnet, dass** die schwenkbare Basis um eine generell vertikale Achse schwenkbar ist.

23. Verfahren zum Auffangen eines Flugzeugs (10 ; 51 ; 52 ; 616), umfassend :
Positionieren einer Arretierleine (20 ; 21 ; 76 ; 121 ; 212 ; 608, 610) quer durch die Flugbahn des Flugzeugs in einer generell vertikalen Orientierung ;
Führen einer seitlichen Ablenkstruktur des Flugzeugs so, dass sie die Leine trifft, wobei die seitliche Ablenkstruktur eine Tragfläche des Flugzeugs umfasst und um mindestens 15 Grad rückwärts gepfeilt oder um mindestens 20 Grad vorwärts gepfeilt ist, um die Leine zuverlässiger seitlich zu iner Fangeinrichtung abzulenken,
Abbremsen des Flugzeugs unter dem Zurückhalten der Leine, während kinetische Energie von dem Flugzeug an einem unteren Ende der Leine absorbiert wird,
und Entfernen des Flugzeugs von der Leine.

24. Verfahren nach Anspruch 23, **gekennzeichnet durch** mindestens teilweise Steuern der Ablenkung der Leine durch mindestens eine von einer zur Durchbiegung gestalteten Struktur (78), einer zum Bremsen gestalteten Struktur (6 ; 204 ; 612) und eines elastischen Kords (390, 391).

25. Verfahren nach Anspruch 23, **gekennzeichnet durch** Positionieren der Fangeinrichtung (26) an dem Flugzeug vorwärts von einer **durch** die Vorderkante der Tragfläche innenbords von der Fangeinrichtung (26) definierten Linie.

26. Verfahren nach Anspruch 23, **dadurch gekennzeichnet, dass** das Flugzeug (51) und die Arretierleine (20, 21) bezüglich der Tragstruktur (8), die die Arretierleine vor dem Entfernen des Flugzeugs von der Arretierleine trägt, erhöht sind.

27. Verfahren nach Anspruch 23, **dadurch gekennzeichnet, dass** das Flugzeug (51) und die Schutzstruktur, um das Flugzeug zu schützen, zusammengebracht werden.

28. Verfahren nach Anspruch 27, **dadurch gekennzeichnet, dass** das Flugzeug (51) und die Schutzstruktur zusammengebracht werden, bevor das Flugzeug aus dem Bergungssystem freigegeben wird.

## Revendications

1. En combinaison, un système de récupération aérien pour un aéroplane et un aéroplane (10 ; 51 ; 52 ; 616) ;
ledit système de récupération aérien comprenant au moins une ligne de saisie (20 ; 21 ; 76 ; 121 ; 212 ; 608, 610) maintenue à au moins une extrémité supérieure par une structure de support (8 ; 78 ; 600), une extrémité inférieure de la ligne de saisie étant immobilisée ;
ledit aéroplane possédant un dispositif de capture (26) pour capturer ladite ligne et une structure de déviation pour dévier ladite ligne latéralement pour une mise en contact avec ledit dispositif de capture ;
**caractérisée en ce que** la structure de support (8 ; 78 ; 600) s'étend depuis un point de suspension supérieur pour la ligne de saisie jusqu'à une base, et **en ce que** la structure de déviation comprend une aile dudit aéroplane, ladite structure de déviation possédant au moins une flèche positive formant un angle de 15° ou une flèche négative formant un angle de 20° pour dévier de manière plus fiable ladite ligne de saisie latéralement par rapport audit dispositif de capture.

2. Combinaison selon la revendication 1, **caractérisée en ce que** le dispositif de capture (26) est un crochet.

3. Combinaison selon la revendication 1, **caractérisée en ce que** la structure de support comprend un appareil de levage déployable et une remorque (4) reliant l'appareil de levage à la base.

4. Combinaison selon la revendication 3, **caractérisée en ce que** l'appareil de levage comprend un paravoile ou un parachute (88), un paraplane (260), un paravoile (244) ou un paraplane (260) orientable, ou encore un paraplane autopropulsé.

5. Combinaison selon la revendication 1, **caractérisée en ce que** la structure de support (78 ; 600) est choisie parmi le groupe comprenant une autre ligne joignant deux flèches (78) l'une à l'autre, et un bras ou un longeron (600).

6. Combinaison selon la revendication 5, **caractérisée en ce que** lesdits bras ou ledit longeron est rotatif.

7. Combinaison selon la revendication 1, **caractérisée en ce que** la ligne (20 ; 21 ; 76 ; 212 ; 608, 610) est un câble.

8. Combinaison selon la revendication 1, **caractérisée en ce que** le dispositif de capture (26) comprend un crochet sur l'aile de l'aéroplane, le crochet englobant un rétrécissement de retenue de ligne (24).

9. Combinaison selon la revendication 1, **caractérisée en ce que** le dispositif de capture englobe un rétrécissement interne (23) plus petit que le diamètre de la ligne de façon à générer une intensité suffisante de force de freinage pour faire en sorte que, après l'intersection de la ligne par le dispositif de capture, le glissement de la ligne à travers le dispositif de capture est essentiellement bloqué.

10. Combinaison selon la revendication 1, **caractérisée en ce que** un dispositif d'absorption d'énergie (6 ; 53 ; 78 ; 204 ; 220 ; 612) est fixé à l'extrémité inférieure de la ligne.

11. Combinaison selon la revendication 1, **caractérisée en ce que** la base comprend une embarcation aquatique (2).

12. Combinaison selon la revendication 1, **caractérisée en ce que** la base comprend le sol.

13. Combinaison selon la revendication 1, **caractérisée en ce que** le dispositif de capture (26) est disposé au bord interne avant d'une emplanture dudit aéroplane.

14. Combinaison selon la revendication 1, **caractérisée en ce que** la ligne de saisie (76) est maintenue par une flèche (78).

15. Combinaison selon la revendication 1, **caractérisée en ce que** ladite ligne de saisie (76) est supportée dans l'air par une autre ligne s'étendant généralement à l'horizontale entre deux flèches (78).

16. Combinaison selon la revendication 1, **caractérisée par le fait qu'**elle comprend en outre un capteur ou une caméra (201, 205 ; 614) pour le guidage de la manoeuvre dudit aéroplane lors de sa mise en contact avec ladite ligne de saisie.

17. Combinaison selon la revendication 16, **caractérisée en ce que** le capteur ou la caméra (201, 205 ; 614) est fixé à la structure de support ou à la ligne de saisie.

18. Combinaison selon la revendication 1, **caractérisée en ce que** le dispositif de capture (26) est positionné à l'avant d'une ligne définie par le bord antérieur de l'aile à l'intérieur dudit dispositif de capture (26).

19. Combinaison selon la revendication 1, **caractérisée en ce qu'**une structure est prévue pour faciliter le soulèvement de la ligne de saisie (20, 21), lorsque ledit aéroplane (51) est fixé à ladite ligne de saisie, par rapport à ladite structure de support (8).

20. Combinaison selon la revendication 1, **caractérisée en ce qu'**une structure est prévue pour réunir l'un à l'autre ledit aéroplane (51) et une structure de protection dans le but de protéger ledit aéroplane.

21. Combinaison selon la revendication 1, **caractérisée en ce que** ladite structure de support (600) est elle-même supportée par une base pivotante reliée à un navire ou reliée au sol.

22. Combinaison selon la revendication 21, **caractérisée en ce que** ladite base pivotante pivote autour d'un axe généralement vertical.

23. Procédé pour capturer un aéroplane (10 ; 51 ; 52 ; 616), comprenant le fait de :
disposer une ligne de saisie (20 ; 21 ; 76 ; 121 ; 212 ; 608, 610) en travers de la trajectoire de vol de l'aéroplane dans une orientation généralement verticale ;
guider une structure de déviation latérale de la lettre plane pour heurter la ligne, la structure de déviation latérale comprenant une aile de l'aéroplane et possédant une flèche positive formant un angle de 15° ou une flèche négative formant un angle de 20° pour dévier de manière plus fiable ladite ligne de saisie latéralement par rapport à un dispositif de capture ;
soumettre l'aéroplane à une décélération lorsqu'il est retenu par la ligne, tout en absorbant l'énergie cinétique de l'aéroplane à une extrémité inférieure de la ligne ;
et séparer l'aéroplane de la ligne.

24. Procédé selon la revendication 23, **caractérisé par** le fait de contrôler au moins en partie la déviation de la ligne via au moins une structure conçue pour dévier (78), une structure conçue pour freiner (6 ; 204 ; 612) et une corde élastique (390, 391).

25. Procédé selon la revendication 23, **caractérisé par** le fait de positionner le dispositif de capture (26) sur l'aéroplane à l'avant d'une ligne définie par le bord antérieur de l'aile à l'intérieur du dispositif de capture (26).

26. Procédé selon la revendication 23, **caractérisé en ce que** ledit aéroplane (51) et ladite ligne de saisie (20, 21) sont soulevés par rapport à la structure de support (8) supportant la ligne de saisie avant de séparer l'aéroplane de la ligne de saisie.

27. Procédé selon la revendication 23, **caractérisé en ce que** ledit aéroplane (51) et une structure de protection pour protéger ledit aéroplane sont réunis l'un à l'autre.

28. Procédé selon la revendication 27, **caractérisé en ce que** ledit aéroplane (51) et ladite structure de protection sont réunis l'un à l'autre avant de séparer l'aéroplane du système de récupération.
